# EUROPEAN PATENT APPLICATION

(11) **EP 2 700 339 A1**
(43) Date of publication of application: **26.02.2014**
(21) Application number: 13183658.7
(22) Date of filing: 30.01.2007
(51) Int. Cl.: A47J 31/30

(54) **Method and apparatus for producing beverages**

(30) Priority: 30.01.2006 IT MO20060030; 06.11.2006 IT MO20060357
(62) Divisional of application: 07705489.8
(71) Applicant: Illycaffè S.p.A., 34147 Trieste (IT)
(72) Inventor: Navarini, Luciano, 34100 Trieste (IT); Barnaba', Massimo, 34149 Trieste (IT); De Luca, Riccardo, 34070 Gorizia (IT); Suggi Liverani, Furio, 34123 Trieste (IT); Mastropasqua, Luca, 34137 Trieste (IT); Bolzicco, Claudio, 33170 Pordenone (IT)
(74) Representative: Crugnola, Pietro

(57) **Abstract**

An apparatus for preparing a coffee beverage (C) comprises containing means (2) for heating an extracting fluid, transferring means (5, 10, 110) arranged for enabling said fluid to pass through a dose of coffee (W) and sending said extracted beverage (C) to collecting means (9), and is characterised in that it comprises inhibiting means (16; 17), arranged for inhibiting said passing through when said fluid contains a substantial steam phase, said inhibiting means (16; 17) being associated with said transferring means (5, 10, 110).

## Description

The invention relates to a method and an apparatus for producing coffee-based beverages, in particular for producing coffee-based beverages through steam-pressure.

Various types of steam-pressure coffee machines are known, which are used above all for domestic use, in which the steam generated inside a boiler exerts pressure that pushes the water contained in the boiler through a panel of coffee powder, thus producing the coffee beverage.

These steam-pressure coffee machines are called henceforth as "mocha" coffee machines.

Figure E shows schematically a "mocha" coffee machine (indicated by the letter K), which comprises a first and a second container that can be hermetically tightened together.

The first container, which acts as a boiler, is shaped so as to contain a certain volume of water, heatable by means of a suitable source of heat, and is provided with an excess pressure valve, i.e. with a safety valve, which is suitably calibrated and arranged for preventing the pressure inside the boiler exceeding a set limit value in the event of a malfunction. In the second container, which acts as a tank, the produced coffee beverage collects.

The "mocha" coffee machine further comprises a filtering funnel, which is interposed between the boiler and the tank and is shaped so as to receive a set quantity of coffee powder, and a conduit, which is comprised in the tank and is arranged for conveying the produced coffee beverage to the tank.

When it is desired to prepare the coffee, a desired volume of water is introduced into the boiler and a desired quantity of coffee is introduced into the filtering funnel and the water in the boiler is heated in order to bring the water to boil.

As is known to those skilled in the art, heating produces a pressure increase inside the boiler that pushes the water therein to pass through the filtering funnel, and thus through the coffee powder. The latter is soaked with water and consequently produces the coffee beverage, which passes through a second filter placed at the base of the tank, ascends the conduit and exits from the upper part of the conduit, collecting in the tank.

In order to heat the water in the tank, various sources of heat can be used, for example the flame of a common gas cooker, or an electric resistance.

Figure F shows schematically another type of steam-pressure coffee machine (indicated by the letter Z), which is devoid of the tank and the conduit of which is shaped in such a way as to convey the produced beverage directly into suitable containers, for example one or more cups of a user, which may be placed at an outlet portion of the conduit. The conduit can be provided with an upper cover, which is shaped so as to define on a side surface of said conduit suitable outlet orifices for the exit of the beverage. The upper cover is arranged for preventing the beverage, pushed by great pressure, from being able to squirt outside the tank.

Figure G shows schematically a further type of steam-pressure coffee maker (indicated by the letter Y), provided with an autoclave-type boiler inside which the water is introduced, which is heated electrically. Through the effect of the heating, steam is produced that pushes the water through a panel of coffee, which is placed on a filter holder from which the produced beverage exits. The produced beverage is collected in suitable containers, for example one or more cups of users, which are placed at the filter holder. The filter holder is shaped in such a way as to be similar to the filter holders used in espresso coffee machines in order to simulate the preparation of espresso coffee. The machine disclosed above has to dispense the coffee beverage in a reasonably short time in order to simulate correctly the preparation of espresso coffee, and therefore the temperature in the boiler has to reach values significantly greater than 100°C in a particularly short time.

A drawback of "mocha" steam-pressure coffee makers as disclosed above is that the beverage produced by the latter has organoleptic properties that are inferior to those of beverages produced by infusion or by machines for "espresso" coffee, in which extraction is not achieved through steam pressure but through a pump that pushes the hot water into contact with the coffee powder. This is due to the particular temperature and pressure conditions that are generated inside these coffee makers during the extraction process.

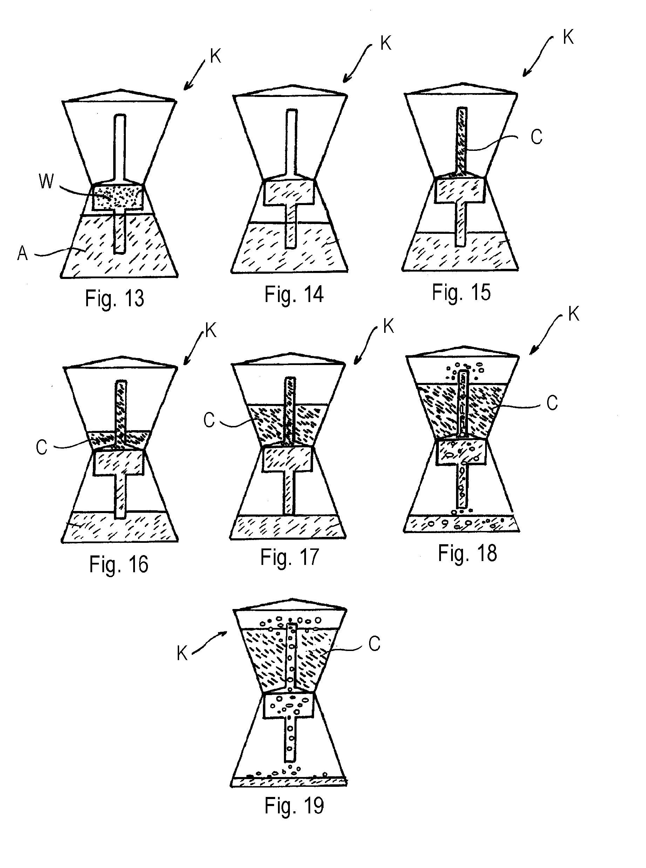

Further, extraction by infusion or by pressure percolation that is obtainable with "espresso" type coffee machines differs substantially from the extraction that is obtainable in known steam-pressure coffee makers inasmuch as in the latter part of the coffee beverage is obtained by passing water at a high temperature(>> 100°C) mixed with water in steam state through the coffee powder, as shown in Figures 13 to 19.

In Figure 13 there is shown the mocha-type coffee maker K, which is loaded with a volume A of water and a quantity of coffee powder W, and which, from a thermodynamic point of view, is initially a closed system. This closed system, once it is placed on a source of heat, both through the expansion of the fraction of air present in the boiler, and above all through the increase in vapour tension of the water contained in the boiler, tends to be transformed into an open system, shown in Figures 18 and 19. By passing from the closed thermodynamic system step in Figure 13 to an intermediate step (Figure 17) between a closed system and an open system, the temperature of the water in the boiler and the corresponding pressure grow progressively. For example, in a 3-cup Mocha Express Bialetti^{®} coffee maker loaded with 15g of coffee powder (Illycaffè^{®} ICN mixture) and 150g of Triest tap water, a water temperature of approximately 111-114°C corresponds to boiler pressure of 0.5 bar (relative). If heating continues until relative pressure inside the boiler reaches 0.7 bar, the water in the boiler has a temperature of approximately 115-117°C. In both conditions, the progressively dispensed beverage has a temperature of <100°C. When a beverage temperature of 100°C is reached, the intermediate step shown in Figure 17 turns into the open thermodynamic system step shown in Figure 18. The water undergoes a phase transition, boils at high temperatures (>118°C) and the steam in the boiler starts to exit together with the very hot water, passing through the panel of coffee, a typical noise corresponding thereto, also known as rumbling or gurgling, which indicates the final preparation step. When the coffee maker is in the open thermodynamic system step of Figures 18 and 19, a coffee beverage C is extracted by means of a mixed water/steam system. The extremely hot water and the steam constituting the mixed system act synergically, extracting from the coffee powder W, together with the coffee beverage C, also substances that are undesirable as they substantially alter the organoleptic properties of the beverage produced.

By keeping the quantity of water (150g) and the initial temperature thereof constant, the aforesaid temperature and pressure values are hardly affected by the dose of coffee, whilst they may vary even significantly, depending on the granulometry (and on the distribution of the granulometry) of the coffee powder, as is well known to those skilled in the art. It is equally known that the quantity of water and the initial temperature thereof can influence the thermodynamics of the process and heating speed.

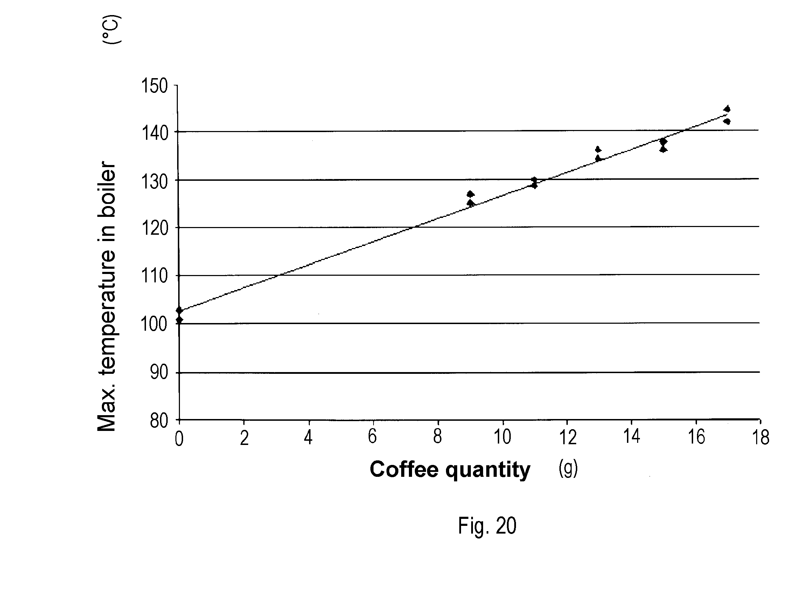

However, it has been experimentally verified that the dose of coffee significantly influences the maximum achievable temperature, during use, in the boiler of a coffee maker. Figure 20 shows a graph of the temperature variation in the boiler of a coffee maker of known type according to the coffee dose used. The graph shows that the maximum temperature reached in the boiler is less than 130°C with an approximately 9g dose of coffee and exceeds 140°C with an approximately 17g dose of coffee. The data displayed on the graph were obtained through double measurements, using a mocha-type coffee maker (3-cup Mocha Express Bialetti^{®} coffee maker) ground coffee (Illycaffè^{®} ICN mixture) and 150g of Triest tap water.

In order to solve the aforesaid problem, EP0607765 provides a coffee maker comprising two distinct boilers into which to introduce water: a first boiler to be placed in contact with a source of heat and a second boiler interposed between the first boiler and a filter containing the coffee powder. When the water of the first boiler has been brought to boiling point, the water exerts a thrust action against a piston interposed between the first boiler and the second boiler. The piston pushes the water of the second boiler, which is hot but has a temperature than is lower than boiling point, to the coffee powder. In this way, the coffee beverage is obtained by soaking the coffee powder with water at a temperature between 75° and 95°C.

Providing two distinct boilers for the water, one containing the water to be brought to boiling point and the other containing the water with which to soak the coffee powder, is also known from EP0148982.

The presence of the second boiler for water makes the coffee makers disclosed in EP0607765 and EP0148982 constructionally more complex, and, above all gives them considerably larger overall dimensions than known coffee makers.

Further, double-boiler coffee makers consume more energy than known coffee makers, because a greater quantity of water has to be heated and they require more time for the preparation of the coffee beverage.

Cooling the water and/or the steam that rise from the boiler through the thrust of the pressure generated inside the latter by the heating of the water is further known from WO94/07400 or IT1245706. The path of the water and/or of the steam to the coffee powder is varied in such a way that before passing through the coffee powder the water and/or the steam pass through exchanger elements in which the water is cooled and any steam present condenses.

A drawback of the solution disclosed above is that the presence of the exchanger element makes these coffee makers more complex and gives them greater overall dimensions than normal coffee makers.

Another drawback is that the maintenance and cleaning of the coffee makers have to be particularly thorough and thus require greater time than what is requested for known coffee makers.

A further drawback is that these coffee makers consume more energy than known coffee makers, as all the water in the boiler is first heated and then cooled before coming into contact with the coffee powder.

An object of the invention is to improve known apparatuses and methods for producing coffee beverages.

Another object is to provide a substantially simple apparatus that enables a coffee beverage to be produced that is provided with great organoleptic properties without requiring excessive consumption of energy.

A further object is to provide a substantially simple apparatus that enables a coffee beverage to be produced using water that is not in steam state.

Still another object is to provide a method for producing a coffee beverage to be produced using water that is not in steam state.

In a first aspect of the invention, an apparatus is provided for preparing a coffee beverage comprising containing means for heating an extracting fluid, transferring means arranged for enabling said fluid to pass through a dose of coffee, and send said coffee beverage to collecting means, characterised in that it comprises inhibiting means arranged for inhibiting said passing through when said fluid contains a substantial steam phase, said inhibiting means being associated with said transferring means.

In a second aspect of the invention an apparatus is provided for preparing a coffee beverage comprising containing means for heating an extracting fluid, transferring means arranged for enabling said fluid to pass through a dose of coffee and sending said extracted coffee beverage to collecting means, characterised in that it comprises inhibiting means arranged for inhibiting said passing through when said fluid contains a substantial steam phase, said inhibiting means being associated with venting means leading into an opening of said collecting means.

In a third aspect of the invention an apparatus is provided for preparing a coffee beverage comprising containing means for heating an extracting fluid, transferring means arranged for causing said fluid to pass through a dose of coffee, characterised in that it comprises inhibiting means arranged for inhibiting said passing through when said fluid contains a substantial steam phase, said inhibiting means comprising pressure-adjusting means that is arranged for adjusting pressure of said fluid inside said containing means and is distinct from overpressure-adjusting means comprised in said apparatus.

In a fourth aspect of the invention a method is provided for obtaining a coffee beverage, comprising heating an extracting fluid for extracting said beverage in order to induce said fluid to pass through a dose of coffee, characterised in that inhibiting said passing through when said fluid contains a substantial steam phase is provided, and suitably adjusting a pressure of said extracting fluid before said passing through is provided, said adjusting being obtained through pressure-adjusting means that is distinct from overpressure-adjusting means.

Owing to these aspects, there is provided an apparatus that is substantially simple and has low energy consumption and a method that enable a coffee beverage to be produced avoiding using water at too high a temperature mixed with water in steam state. The coffee beverage that is thus obtained has great organoleptic properties, which are comparable with the organoleptic properties of the beverages that are obtainable by means of "espresso" coffee machines.

It has in fact been found that by making the steam exit in a controlled manner from a "mocha"-type coffee maker, when the latter is in the operating steps disclosed above with reference to Figures 13 to 16, i.e. in the steps preceding the passage from a closed thermodynamic system to an open thermodynamic system (Figures 17), the subsequent steps in which the "mocha"-type coffee maker acts as an open thermodynamic system (Figures 18 and 19) are inhibited until they are substantially cancelled.

This technical effect, which is obtained through the inhibiting means and is surprisingly unexpected, enables the organoleptic properties of the extracted coffee beverage C to be improved significantly.

The inhibiting means comprises pressure-regulating means that enables the relative pressure value of the extracting fluid inside the containing means to be maintained within a range comprised between approximately 0.01 and 6 bar.

In an embodiment, the pressure-adjusting means enables the relative pressure value of the extracting fluid to be maintained in a range comprised between approximately 0.2 and 1.0 bar.

In another embodiment, the pressure-adjusting means enables the relative pressure value of the extracting fluid to be maintained in a range comprised between approximately 0.3 and 0.8 bar.

When the apparatus for preparing coffee beverages is made, the pressure-adjusting means can be preset, establishing an upper pressure limit value, at which the pressure-adjusting means opens to reduce the pressure of the extracting fluid, and a lower pressure limit value, at which the pressure-adjusting means closes again as the pressure value reached by the extracting fluid is such as to ensure that the beverage is extracted through the fluid in a substantial liquid phase. The upper pressure limit value and the lower pressure limit value depend on the geometrical features and on the dimensions of the apparatus on which the adjusting means is provided. The aforesaid limit values can therefore be defined when the apparatus is designed and/or assembled. The pressure-adjusting means can operate for a desired number of times during the same beverage preparation cycle, i.e. whenever extracting-fluid pressure is greater than a set limit value, so as to return pressure to a desired value.

In particular, the pressure-adjusting means can start operating whenever it is necessary to act on the pressure of the extracting fluid to ensure that the coffee beverage is produced only by soaking with water mainly in liquid state. In this way, it is possible to obtain a beverage by soaking a determined quantity of coffee only with water, i.e. preventing the coffee being wetted by a fluid containing steam.

Prior-art gravity (or weight) valves may be used as pressure-adjusting means, of the type used as operating valves in pressure cookers, or prior-art spring valves with radial, lateral or other steam vents that are well known to those skilled in the art.

In addition to the aforesaid calibrating limit value, also the steam flow performs an important role and has to be suitably defined.

The calibrating values indicated by those skilled in the art for spring valves generally refer to a vapour flow of 100 NL/h.

It is possible to use spring valves having various pressure/flow profiles, such as those exemplified in Table 1 set out below:

**Table 1**

| Pressure | Flow (NL/h) | Flow (NL/h) | Flow (NL/h) | Flow (NL/h) |
|---|---|---|---|---|
| (bar) | Spring valve 1 | Spring valve 2 | Spring valve 3 | Spring valve 4 |
| 0 | 0 | 0 | 0 | 0 |
| 0.05 | 0 | 0 | 0 | 0 |
| 0.1 | 0 | 0 | 0 | 0 |
| 0.15 | 0 | 0 | 0 | 0 |
| 0.2 | 0 | 0 | 0 | 0 |
| 0.25 | 0 | 0 | 0 | 0 |
| 0.3 | 0 | 0 | 0 | 0 |
| 0.35 | 0 | 25 | 0 | 0 |
| 0.4 | 25 | 30 | 25 | 0 |
| 0.45 | 30 | 40 | 80 | 0 |
| 0.5 | 50 | 60 | 100 | 0 |
| 0.55 | 80 | 70 | Over 250 | 25 |
| 0.6 | 100 | 100 | | 50 |
| 0.65 | 140 | 120 | | 100 |
| 0.7 | 170 | 140 | | 200 |
| 0.75 | Over 250 | 170 | | Over 250 |
| 0.8 | | 250 | | |
| 0.85 | | Over 250 | | |

It should further be noted that as heat exchanger elements, supplementary boilers or pistons are not required, the apparatus is substantially simple to build and has reduced energy consumption.

The coffee can be in powder form or be crumbled to promote extraction, or be in the form of capsules, portions or cartridges containing pre-dosed quantities of coffee powder. Whatever the form used, the coffee panel produces a variable load weight depending on time and/or temperature, the initial conditions of which are defined by the composition of the coffee powder and of the granulometry of the latter. In fact, the degree of grinding, and therefore of granulometry, of the coffee powder and the resistance opposed by the panel of coffee to the flow of the extracting liquid are mutually correlated. Consequently, the pressure-adjusting means, i.e. the valves, is calibrated in a variable and suitable manner, during manufacturing, depending on the granulometry of the coffee powder to be used.

As is known to those skilled in the art, in coffee powder, the granulometry values (expressed in µm) are distributed statistically according to a multimodal distribution curve, which is variable on the basis of the degree of grinding of the powder. The Table 2 shown below shows the ranges of statistical parameters, each of which was obtained by statistically comparing various distributions of granulometry of coffee powders that are suitable for being used in coffee machines provided with the aforesaid pressure-adjusting means. Granulometry was determined experimentally through known methods and means.

**Table 2**

| Statistical parameter | Granulometry range (µm) |
|---|---|
| Mean average | 500 - 200 |
| Median average | 500 - 100 |
| Modal average | 700 - 500 |
| Percentile below 10 | 20 - 10 |
| Percentile below 25 | 60 - 30 |
| Percentile below 50 | 500 - 100 |
| Percentile below 75 | 750 - 450 |
| Percentile below 90 | 950 - 650 |

Table 2 shows, for example, that a coffee powder is particularly suitable for being used in one of the apparatuses provided by the invention when the average granulometry thereof is comprised between approximately 500 and 200 µm.

The invention will be better understood and implemented with reference to the attached drawings that show an embodiment thereof by way of non-limiting example, in which:

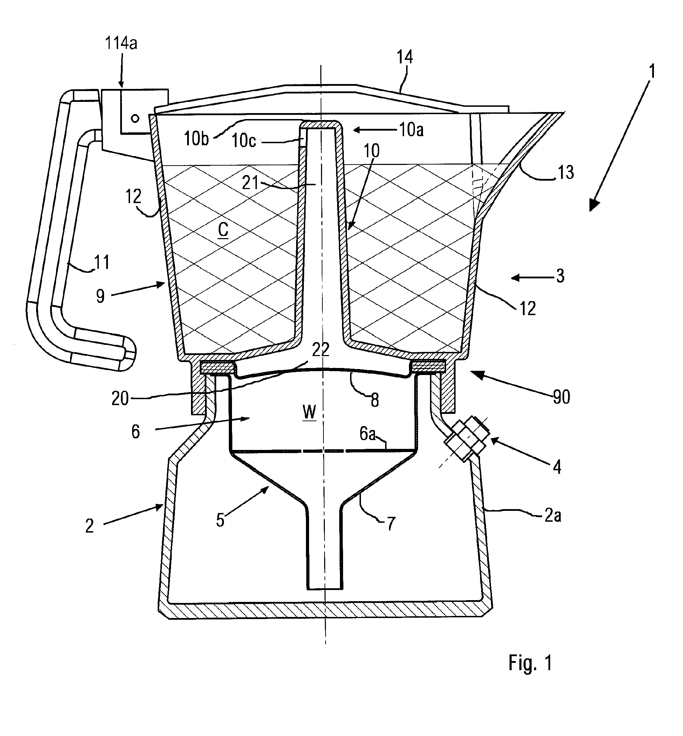

Figure 1 is a longitudinal schematic section showing a coffee maker of the "mocha" type provided with pressure-adjusting means;

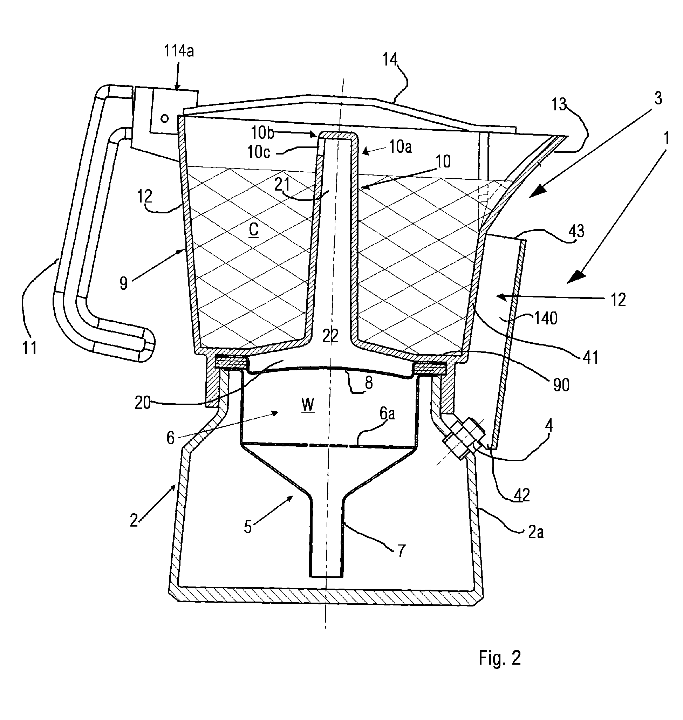

Figure 2 is a longitudinal schematic section of an embodiment of the machine in Figure 1;

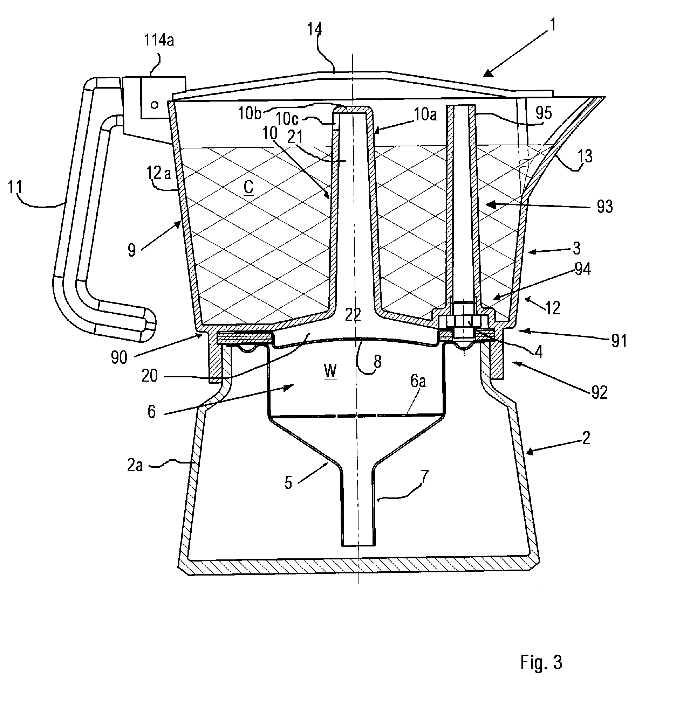

Figure 3 is a longitudinal schematic section of another embodiment of the machine in Figure 1;

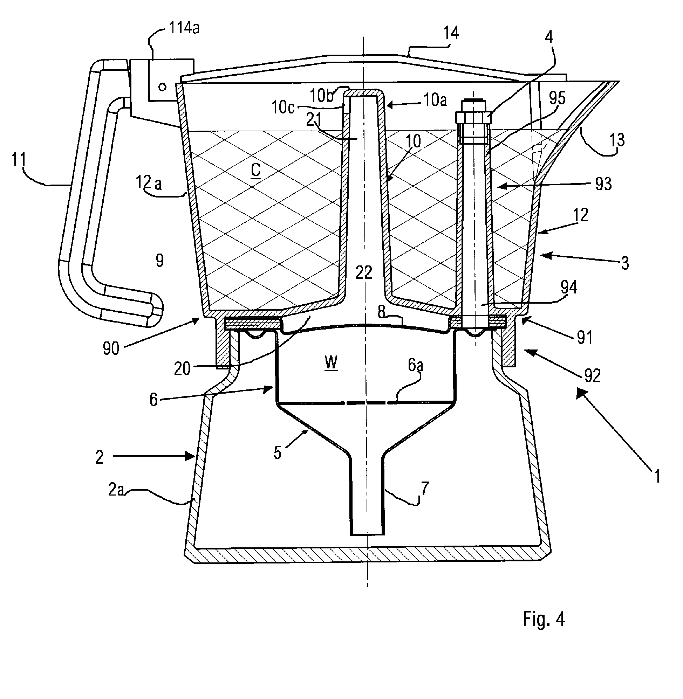

Figure 4 is a longitudinal schematic section of a further embodiment of the machine in Figure 1;

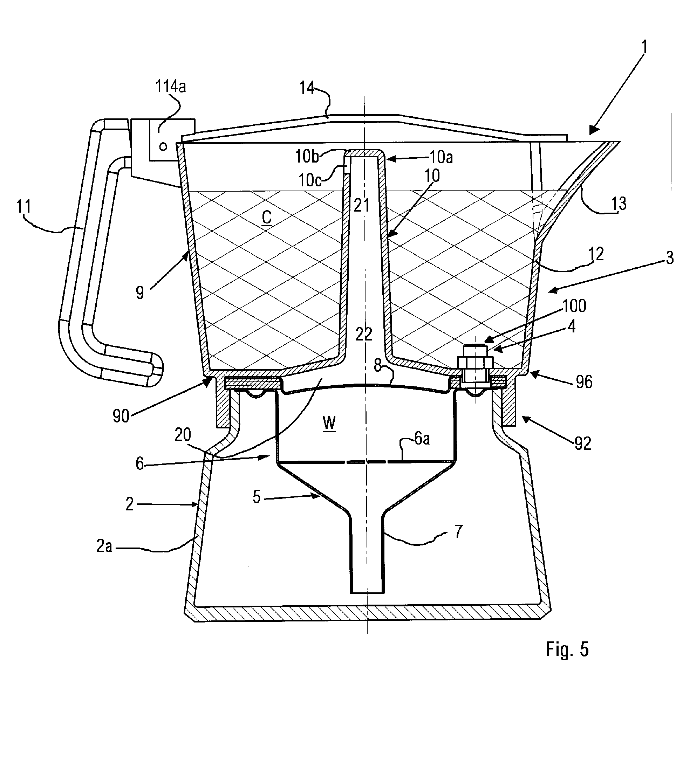

Figure 5 is a longitudinal schematic section of a still further embodiment of the machine in Figure 1;

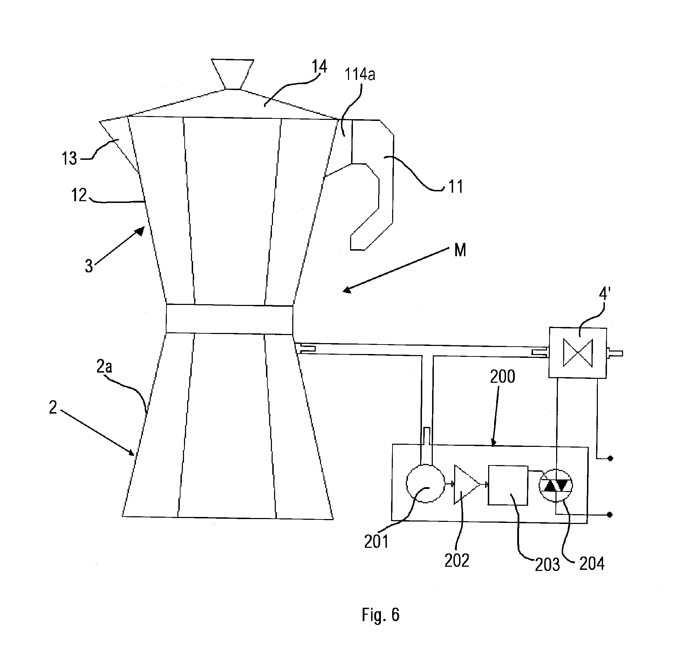

Figure 6 is a lateral schematic view of a coffee maker of the three-cup Mocha Express Bialetti® type, illustrating the operating pattern of an electronic system of control of pressure-adjusting means;

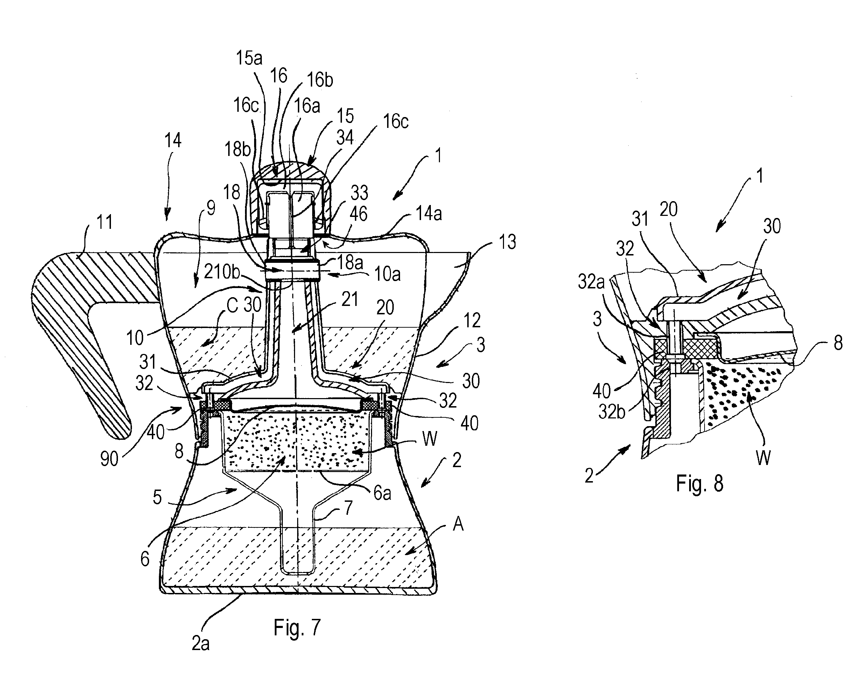

Figure 7 is a schematic longitudinal section showing a further coffee maker of the "mocha" type provided with pressure-adjusting means;
Figure 8 is an enlarged, fragmentary and incomplete schematic longitudinal section showing a constructional detail of the machine in Figure 7;

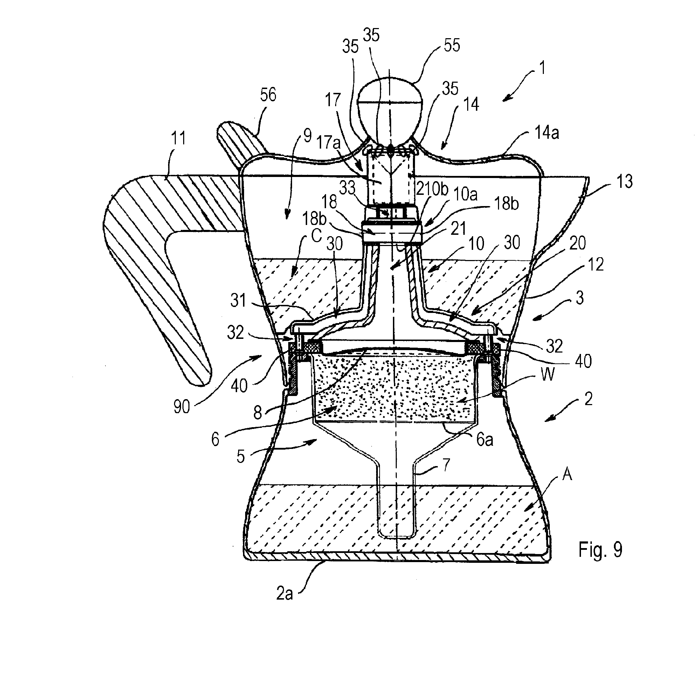

Figure 9 is a schematic longitudinal section showing an embodiment of the machine in Figure 7;

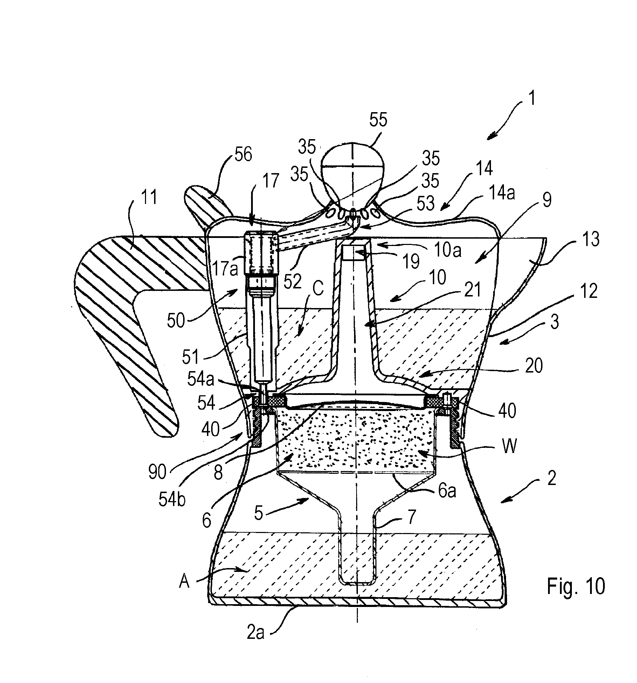

Figure 10 is a schematic longitudinal section showing another embodiment of the machine in Figure 7;

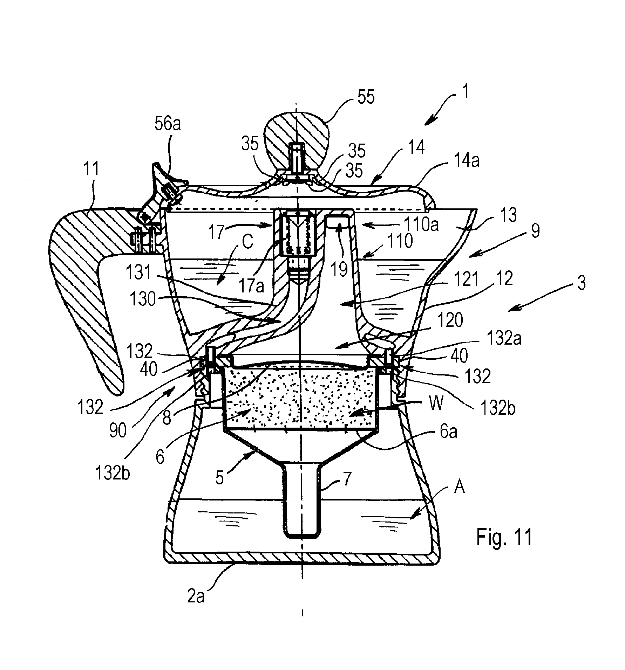

Figure 11 is a schematic longitudinal section showing a further embodiment of the machine in Figure 7;

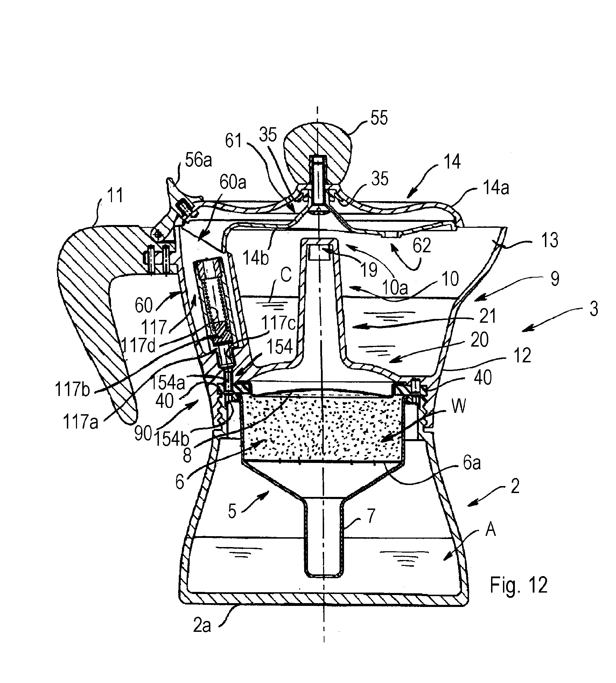

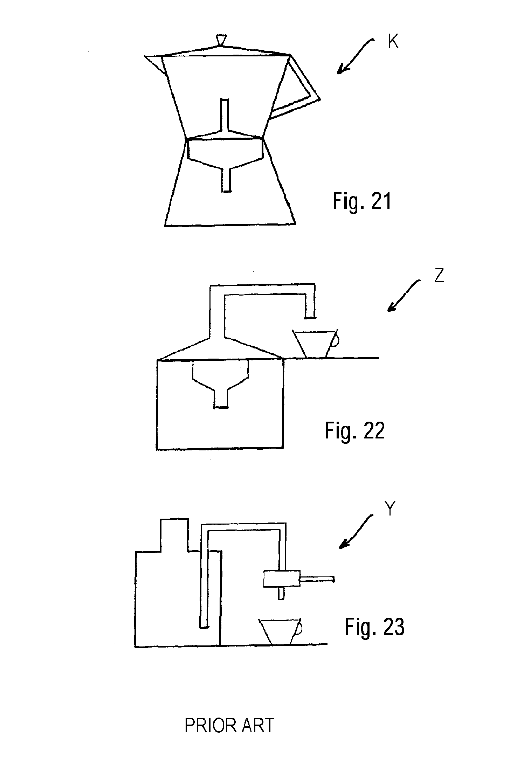

Figure 12 is a schematic longitudinal section showing a still further embodiment of the machine in Figure 7;
Figures 13 to 19 show schematic longitudinal sections of a prior-art coffee maker of the "mocha" type, and illustrate the operation thereof;
Figure 20 is a graph showing how the dose of coffee affects the maximum temperature that is reachable in the boiler of a coffee maker of known type;
Figures E, F and G shows schematic longitudinal sections of various prior-art steam-pressure coffee makers.

With reference to Figure 1, the coffee machine 1 comprises a boiler 2, into which the water to be heated is introduced and which is placed in contact with a source of heat, and an upper portion or tank portion 3, which is tightened, in use, onto the boiler 2.

The coffee machine 1 further comprises a funnel container 5, comprising a cavity or containing portion 6 bounded below by a filter surface or face 6a, into which a desired quantity of powder is introduced, i.e. a dose of coffee W, and a duct or conduit portion 7 projecting from the containing portion 6. The funnel container 5 is inserted inside the boiler 2 in such a way that the conduit portion 7 projects from the containing portion 6 to the bottom of the boiler 2.

The tank portion 3 comprises a lower surface or filtering base face 8, a tank 9 in which the coffee beverage C produced collects and which is connected to the filtering base face 8 through a hollow conduit or conveying conduit 10, a grip 11 for enabling grasping by a user, a side surface or wall 12 provided with a protruding portion or lip portion 13 through which the beverage is poured, and a movable and removable lid 14 hinged on the side wall 12 at a hinging portion 114a.

The conveying conduit 10 is fitted to a bottom portion 90 of the tank 9 and comprises a base portion 20 that is substantially conical and arranged on the bottom portion 90, and a conveying portion 21, which is connected to the base portion 20 through a connecting zone 22.

The base portion 20 conveys the coffee beverage C existing the filtering base face 8 to the conveying portion 21, extending from the connecting zone 22 to an upper zone or end portion 10z of the conveying conduit 10, into which the coffee beverage flows and is then discharged into the upper zone 10a. The conveying portion 21 can be cylindrical or drawn slightly upwards.

The end portion 10a of the conveying conduit 10, at which the obtained coffee beverage exits, may have a completely free outlet section or be provided with partial opening 10b portions. In the latter case, the produced coffee beverage C exits from suitable holes 10c provided in the conveying conduit 10.

The conveying conduit 10 has a total longitudinal extent, defined as the distance between the base filtering face 8 and the partial cover portions 10b that depends on the volume (number of cups) of beverage that it is wished to obtain.

The coffee machine 1 further comprises a safety valve, which is not shown, which is arranged for preventing pressure inside the boiler 2 from exceeding a set maximum value, the safety valve being suitable for opening in the event of a coffee machine 1 malfunction. This enables conditions to be avoided that are hazardous for a user of the coffee machine 1.

The coffee machine 1 further comprises an adjusting valve 4 arranged for preventing pressure inside the boiler 2 exceeding a set further maximum valve, the adjusting means 4 being preset in such a way as to maintain the pressure values in the boiler 2 around a value range comprised between 0.01 and 5 bar. These pressure values are taken to be relative pressure values, i.e. they assume an atmospheric pressure value of 0 bar.

The adjusting valve 4 is preset in such a way as to open at an upper pressure limit value to reduce the pressure of the extracting fluid inside the boiler 2to a lower pressure limit value, at which the adjusting value 4 closes again.

In this way the adjusting valve 4 acts in such a way that positive pressure is maintained inside the boiler 2 that is such as to enable the water to pass through the coffee powder W, but is such as to prevent the steam passing through the coffee powder.

By maintaining the pressure inside the boiler 2 below the upper limit value set for the adjusting valve 4 an excessive quantity of steam inside the boiler 2 is prevented from forming and it is thus prevented that the coffee beverage is produced with water in steam state.

In fact, the formation of a great quantity of steam generates an increase in the pressure inside the boiler 2 and therefore the consequent opening of the adjusting valve 4, the venting of the steam outside the boiler 2 and the consequent restoration inside the boiler 2 of the desired pressure conditions.

As shown in Figure 1, the adjusting valve 4 can be positioned on a side surface 2a of the boiler 2.

With reference to Figure 2, in which a coffee machine 1 is shown that is similar to that in Figure 1, the tank portion 3 is provided with a vent pipe 140.

The vent pipe 140 extends on a portion 41 of the side wall 12 and is shaped in such a way that, in use, a lower portion 42 thereof winds the adjusting valve 4 to receive the steam emitted from the adjusting valve 4. The steam is then discharged below the lip portion 13 through an upper portion 43 of the vent pipe 140.

In Figure 3 there is shown a coffee machine 1 that is similar to that of Figure 1, so that the corresponding parts are indicated by the same reference numbers.

In the embodiment in Figure 3, the adjusting valve 4 is positioned on a zone 91 of the bottom portion 90 of the tank 9, and connecting means 92 is provided for connecting the adjusting valve 4 to the boiler 2. There is further provided a further vent pipe 93, arranged for receiving the steam emitted by the adjusting valve 4, that extends inside the tank 9 almost parallel to the conduit 10 and which is positioned in such a way that a lower portion 94 of the further vent pipe 93 envelops the adjusting valve 4 and an upper portion 95 of the further vent pipe 93 is arranged below the lid 14.

The embodiment of the coffee machine 1 shown in Figure 4 is very similar to the embodiment shown in Figure 3, nevertheless differing from the latter because the adjusting valve 4 is positioned at the upper portion 95 of the further vent pipe 93.

In the embodiments disclosed with reference to Figures 3 and 4, the steam emitted by the adjusting valve 4 is released inside the tank 9.

In the embodiment in Figure 5 the adjusting valve 4 is positioned on a further zone 96 of the bottom portion 90 of the tank 9, in such a way that the steam emitted by the adjusting valve 4 is released into the tank 9 directly inside the coffee beverage C in the tank 9. In this embodiment, dispersing means 100 is further provided that is interposed between the adjusting valve 4 and the coffee beverage C and arranged for dispersing the steam emitted by the adjusting valve 4 inside the coffee beverage C. This causes froth to be formed inside the coffee beverage C.

In an embodiment that is not shown, the dispersing means 100 can replace the adjusting valve, in fact by suitably calibrating and/or configuring this dispersing means, it is possible for them to adjust the pressure inside the boiler 2 of the coffee machine 1. The excess steam produced in the boiler 2 is released through the dispersing means 100 inside the beverage, which beverage is produced only when pushed by a force sufficient to overcome the resistance of the dispersing means, i.e. when the pressure inside the boiler 2 exceeds the desired value.

With the coffee machine 1 of Figure 5 a coffee beverage is obtained that is completely similar to the coffee beverage produced by espresso machines, not only in terms of organoleptic features, but also the external appearance.

The froth of the coffee beverage has a persistence and features that differ according to the dispersing means 100 used and the particular configuration thereof, depending for example on the dimensions of the dispersion holes provided in the dispersing means 100.

Suitable known dispersing means such as, for example, porous materials, perforated baffles, slit baffles, elastomeric membranes, sintered glass can be used as dispersing means. Further, there can also be provided holes of suitable dimensions or a jet in the vent portion of the adjusting valve 4.

In Figure 6 there is shown a three-cup coffee maker "M" of the Mocha Express Bialetti® type provided with an electronic control system 200 for controlling an adjusting electronic valve 4' arranged for preventing pressure conditions being generated in the boiler 2 that are such as to cause the coffee beverage to be extracted with water in a steam state.

The electronic control system 200 comprises a pressure sensor 201 placed in communication with the boiler 2 in such a way as to detect automatically the pressure in the boiler 2 and to transmit the signal automatically to an amplifier 202 that amplifies the signal to adapt it to the scale of sensitivity of a microprocessor 203.

The microprocessor 203 receives the signal from the amplifier, compares it with an upper comparison limit value and a lower comparison limit value that are predefined and preset in the microprocessor 203 and, if the values that are recorded are greater than the upper comparison limit value, sends a command to a control device, for example a triac 204, to open the electronic adjusting valve 4'.

In this way the electronic adjusting valve 4' opens, releasing a given quantity of steam from the boiler 2 in such a way as to restore the pressure values inside the boiler 2 to within a desired pressure value range.

When the pressure value detected by the sensor 201 and received by the microprocessor 203 is lower than the lower comparison limit value, the microprocessor 203 commands through the triac 204 the closure of the electronic adjusting valve 4'.

Also in this case, the electronic adjusting valve 4' can open and close several times over the same coffee beverage preparation cycle.

The adjusting system 200 can operate in a continuous manner during operation of the coffee machine 1.

In an embodiment that is not shown, the control system 200 can be provided inside suitable portions of the body of the coffee machine 1, in a base portion of the electric coffee maker, or also in a sort of liner outside the boiler, or in other desired portions to obtain coffee machines with a more varied and desired design.

In order to prepare a coffee beverage, a suitable quantity of water is introduced inside the boiler 2, a suitable quantity of coffee powder is introduced into the funnel container 5, which is inserted inside the boiler 2, the upper portion 3 is tightened to the boiler 2 and then the coffee machine 1 is subjected to the action of a source of heat.

The water in the boiler 2 heats up, causing a pressure increase that pushes part of the water of the boiler 2 up through the conduit 7 until it comes into contact with the coffee powder, wetting the latter and extracting the coffee beverage C therefrom. The coffee beverage C passes through the filtering base face 8, goes up the conduit 10 to the upper zone 10a to exit from the latter through the holes 10c and collect in the tank 9.

Through the effect of the heat and the consequent increase in the pressure and temperature inside the boiler 2, after a certain period of time extraction of the coffee beverage would tend to occur through solid-liquid-steam extraction. The presence of the suitably calibrated adjusting valve 4 enables solid-liquid-steam extraction to be avoided because when the pressure in the boiler 2 reaches values at which this extraction would occur, the adjusting valve opens, discharging air and steam and thus again decreasing pressure inside the boiler 2.

Laboratory tests conducted using a three-cup coffee maker, for example a suitably modified coffee maker of the Mocha Express Bialetti® type, like the one in Figures 6, for producing a coffee beverage starting with 15g of coffee powder (ILLYCAFFE'® mixture), and 150 ml of water with a hardness of approximately 18°-20°F, have shown that in order to obtain a coffee beverage through soaking the coffee powder only with water in liquid state it is necessary for the adjusting valve to open when pressure of 0.7 bar is reached in the boiler to discharge the steam outside and close when the pressure in the boiler has reached 0.5 bar. This enables a beverage with great organoeliptic properties to be obtained using the coffee machines disclosed above.

If the air and steam are discharged into the beverage through suitable dispersing means that is able to create a plurality of bubbles, minute microbubbles, it is possible to induce the formation of a layer of froth floating on top that gives the beverage an appearance that very similar to that of an espresso preparation. The smaller the diameter of the bubbles generated, the greater the persistence of the formed froth in the beverage. This also enables the external appearance of the coffee beverage produced to be improved, giving a user the complete sensation of drinking a beverage that is similar to the one that is obtainable with an espresso preparation.

Further, by suitably varying the form of the constructional elements and the position and the structure of the pressure-adjusting valves in the coffee machine 1, it is possible to obtain apparatuses (disclosed below with reference to Figures 7 to 12) that are provided with shapes that adapt to the various design requirements and are able to produce a coffee beverage having great organoleptic properties. Figures 7 and 8 show a coffee machine 1, comprising the boiler 2, into which, in use, a suitable volume A of water to be heated is introduced and which is brought into contact with a source of heat (that is not shown), and the tank portion 3 that is tightened on the boiler 2. Between the boiler 2 and the tank portion 3 known seal means is interposed, for example a ring seal 40. The boiler 2 is provided with a safety valve of known type (not shown), arranged for preventing pressure inside the boiler 2 exceeding a preset maximum value in use. If undesired overpressure is created due to malfunctioning of the coffee machine 1, the safety valve opens and discharges the overpressure to the exterior, thus preventing hazardous conditions for a user of the coffee machine 1 occurring.

The funnel container 5 is inserted into the boiler 2 in use, the funnel container 5 comprising the containing portion 6 and the conduit portion 7, between which there is interposed the filter face 6a, which is substantially circular. The containing portion 6 is substantially shaped as a hollow cylinder and is suitable for receiving the desired quantity (dose) of coffee powder W. The conduit portion 7 is substantially conical near the filter face 6a, then suddenly narrowing so as to be roughly cylindrical. The funnel container 5 is inserted vertically into the boiler 2, in such a way that the containing portion 6 faces a direction opposite a bottom 2a of the boiler 2, whilst the conduit portion 7 faces the bottom 2a.

The tank portion 3 comprises the tank 9 bounded by the side wall 12, in which the coffee beverage C collects once produced.

The bottom portion 90 of the tank 9 is closed by the filtering base face 8, which is slightly concave in the direction of the containing portion 6 of the funnel container 5. The grip 11, which is graspable by a user, is fixed to the side wall 12 in a portion of the latter that is opposite the bottom portion 90. The side wall 12 defines, in a position opposite the grip 11, the lip portion 13, through which the coffee beverage C can be poured by the user. The tank 9 is closed above by the lid 14, which is hinged to the side wall 12 through hinge means (not shown) and is liftable for inspecting the tank 9. In a substantially central portion of a visible face 14a of the lid 14 there is fixed a covering element 15, approximately cylinder-shaped. In the covering element 15 there is obtained a recess 15a, which is approximately cylindrical and communicating with the external environment through vent openings (not shown) obtained in the covering element 15. The recess 15a is intended for housing a weight-operated adjusting valve 16, of known type, the structure and function of which will be disclosed in detail below. As the covering element 15 is fixed to the lid 14 near an opening 46 obtained in the latter, the recess 15a communicates with the tank 9 below. From a substantially central zone of the bottom portion 9 there projects, in the direction of the lid 14, the conveying conduit 10, the dimensions of which are set on the basis of the volume, i.e. the number of cups of coffee beverage C that it is wished to obtain through the coffee machine 1. The conveying conduit 10 comprises the approximately dome-shaped base portion 20, from a substantially central zone of which there projects, in the direction of the lid 14, the approximately conical conveying portion 21.

In use, the base portion 20 receives, through the filtering base face 8, the coffee beverage C produced through extraction in the containing portion 6 of the funnel container 5. The coffee beverage C rises from the base portion 20 to the conveying portion 21 and runs upwards along the latter until it reaches an end portion 10a, corresponding to the apex of the conveying conduit 10. In the end portion 10a there is obtained an outlet conduit 18 that is cylinder-shaped and arranged orthogonally with respect to the conveying conduit 10. Through a communicating hole 210b, the coffee beverage C coming from the conveying portion 21 enters the outlet conduit 18 and exits the latter through two opposite end openings 18a, 18b, then discharging into the tank 9.

Outside the conveying conduit 10 there is mounted a casing 31, which is shapingly coupled with the conveying conduit 10 and is such as to define, together with the latter, a venting gap 30 that peripherally envelops the conveying conduit 10. The venting gap 30 is made to communicate with the boiler 2 through a plurality of passage elements 32, made in the shape of conduits or slots. Each passage element 32 comprises a first passage portion 32a and a second passage portion 32b, that are mutually aligned and obtained in zones corresponding to the tank portion 3 and the boiler 2 (Figure 2). Near the end portion 10a of the conveying conduit 10, the venting gap 30 is prolonged beyond the outlet conduit 18, substantially enveloping the latter, and leads into a chamber 33. Into the chamber 33 a discharge conduit 34 leads, which is obtained along a longitudinal axis, which is not shown, of a cylindrical body 16a of the weight-operated adjusting valve 16. The discharge conduit 34 passes through the entire body 16a opening near a shutter element 16b. The shutter element 16b, which is shapingly coupled with the body 16a and with the recess 15a, is arranged for alternatively opening or closing the discharge conduit 34 of the body 16a. Near a free edge of the shutter element 16b discharge holes 16c are obtained.

When the shutter element 16b is spaced from the body 16a (i.e. when the weight-operated adjusting valve 16 is open), the discharge channel 34 is open, and this enables the boiler 2 to communicate with the external environment through: the passage elements 32, the venting gap 30, the chamber 33, the discharge conduit 34, a further gap (not shown) that forms between the body 16a and the shutter element 16b when the latter is distanced from the body 16a, the discharge holes 16c of the shutter element 16b and the vent openings of the covering element 15. Vice versa, when the shutter element 16b rests on the body 16a in such a way as to shut the discharge channel 34, the weight-operated adjusting valve 16 is shut and the boiler 2 is separated from the external environment.

The weight-operated adjusting valve 16 is calibrated in such a way as to maintain the relative pressure values (i.e. the pressure defined by assuming the atmospheric pressure value to be equal to 0 bar), generated in the boiler 2, within a range comprised between 0.01 and 6 bar, preferably (as shown by experimental tests) between 0.2 and 1.0 bar and still more preferably between 0.3 and 0.8 bar. This means that the weight-operated adjusting valve 16 opens when the pressure inside the boiler 2 reaches and exceeds a preset upper limit value and closes when said pressure reaches and falls below a lower limit value.

The pressure value at which the valve has to open depends on the quantity of beverage that it is desired to obtain, or on the quantity of beverage that it is desired to reject inasmuch as it is extracted by means of high-temperature water mixed with steam. For example, using the 3-cup Mocha Express Bialetti^{®} coffee maker, 15 g of ground coffee (Illycaffè^{®} mixture) and 150 g of Triest tap water, there is obtained on average a volume of beverage equal to 130-140 ml. In order to improve the organoleptic properties of the extracted beverage it is necessary to reject a final fraction thereof, equal to approximately 20-40 ml, obtained through extraction with high-temperature water mixed with steam, i.e. prevent this final portion being produced. This is obtained through opening the valve, which must then be calibrated in such a way as to prevent the aforesaid final portion of the beverage from being produced.

In order to prepare a coffee beverage using the coffee machine 1 shown in Figures 7 and 8, the volume A of water is poured into the boiler 2 and the quantity of coffee powder W is introduced into the funnel container 5, inserted vertically into the boiler 2. The tank portion 3 is tightened on the boiler 2 and the coffee machine 1 is subjected to the action of the source of heat. The water contained in the boiler 2 is heated and causes a pressure increase that pushes part of the water to rise through the conduit portion 7 and to pass through the filter face 6a, thus coming into contact with the coffee powder W. The water wets the coffee powder W, extracting the coffee beverage C therefrom, which passes through the filtering base face 8 and, as previously disclosed, rises completely up the conveying conduit 10 and exits therefrom through the holes 18a, 18b, gathering at last in the tank 9.

Through the effect of the temperature and pressure increase that occurs inside the boiler 2, the coffee beverage C would tend to be extracted in the solid-liquid-steam phase, inasmuch as steam, as well as high-temperature water would tend to pass through the quantity of coffee powder W.

This is avoided, in the coffee machine 1, owing to the weight-operated adjusting valve 16. In fact, when the pressure inside the boiler 2 reaches and exceeds the upper limit value, the shutter element 16b is lifted and spaced from the body 16a and the discharge conduit 34 opens, opening the weight-operated adjusting valve 16 and consequently putting the boiler 2 in communication with the external environment. This enables air and steam to be discharged outside the boiler 2 and pressure to be reduced in the latter to below the upper limit value. If pressure is reduced until it reaches and falls below a preset lower limit value, the shutter element 16b rests on the body 16a closing the discharge conduit 34 and consequently the weight-operated adjusting valve 16.

In this way, the weight-operated adjusting valve 16 ensures that inside the boiler 2 positive pressure is maintained that enables the water in the boiler 2 to pass through the quantity of coffee powder W, but prevents steam passing through the quantity of coffee powder W. By maintaining the pressure inside the boiler 2 below the upper limit value preset by the weight-operated adjusting valve 16, an excessive quantity of steam is prevented from forming inside the boiler 2 and producing the coffee beverage C from water in steam state is thus prevented. In fact, when a greater quantity of steam is formed this generates increased pressure inside the boiler 2 and thus causes the weight-operated adjusting valve 16 to open, steam to escape outside the boiler 2 and the desired pressure conditions to be thus restored inside the boiler 2.

Figure 9 shows an embodiment of the coffee machine 1, which differs from the machine disclosed with reference to Figures 7 and 8 only inasmuch as the weight-operated adjusting valve 16 is replaced by a spring-operated adjusting valve 17 and on the lid 14, near the grip 11, there is fixed a lever element 56, by acting on which it is possible to lift the lid 14 and inspect the tank 9. The adjusting valve 17, of known type, comprises a cylindrical body 17a, in the inside of which a spring and piston (which are not shown) are housed. The spring is arranged in such a way as to press the piston against a discharge hole (which is not shown) of the spring-operated adjusting valve 17, so as to shut the hole and then also the spring-operated adjusting valve 17. The spring is calibrated in such a way as to maintain the piston pressed against the discharge hole until, in the boiler 2, the upper pressure limit value is reached. When the latter is reached and exceeded, the spring is no longer able to maintain the piston in position, the piston is removed from the discharge hole and opens the spring-operated adjusting valve 17.

The spring-operated adjusting valve 17 is mounted above the end portion 10a of the conveying conduit 10, being comprised between the chamber 33 obtained in the latter and the lid 14. The covering element 15 is replaced by an approximately oval knob 55, around which, in the lid 14, a plurality of outlet holes 35 is obtained.

When in the boiler 2 the pressure reaches and exceeds the upper limit value, the spring-operated adjusting valve 17 opens, bringing the boiler 2 into communication with the external environment. The excess steam, after passing through the passage elements 32, the venting gap 30, the chamber 33 and the discharge hole of the spring-operated adjusting valve 17, exits the tank 9 through the outlet holes 35. When in the boiler 2 pressure falls below the lower limit value, the spring returns the piston against the discharge hole and the spring-operated adjusting valve 17 closes again.

Figure 11 shows another embodiment of the coffee machine 1, equipped with the spring-operated adjusting valve 17 and provided with an embodiment of the conveying conduit indicated by the number 110 and with an embodiment of the venting gap indicated by the number 130.

The conveying conduit 110 comprises a base portion 120, which has an irregular dome shape, from a peripheral zone of which there projects, in the direction of the lid 14, an approximately conical conveying portion 121. In an end portion 110a of the conveying conduit 110, corresponding to the apex of the latter, there is obtained an outlet opening 19, through which the produced coffee beverage C is discharged into the tank 9.

The venting gap 130 is comprised between the conveying conduit 110 and a casing 131 that is shapingly coupled with the conveying conduit 110 and envelops the latter only partially. In the embodiment illustrated in Figure 5 the casing 131 is made in a single piece with the conveying conduit 110 and the side wall 12 of the tank 9. The gap 130 is placed in communication with the boiler 2 through a plurality of passage elements 132, made in a substantially similar manner to the passage elements 32 disclosed with reference to Figures 1 and 2. Each of the passage elements 132 comprises a first passage portion 132a and a second passage portion 132b, mutually aligned and obtained in corresponding zones of the tank portion 3 and of the boiler 2.

The spring-operated adjusting valve 17, the function and structure of which were disclosed with reference to Figure 3, is housed in an end portion of the venting gap 130 and faces in the direction of the outlet holes 35. The spring-operated adjusting valve 17 is thus substantially placed alongside the outlet opening 19 of the conveying conduit 110, and arranged along a longitudinal axis (which is not shown) of the tank 9.

The lid 14 is liftable by acting on a lever 56a, fixed to the lid 14 near the grip 11 and hinged on the latter.

When in the boiler 2 the pressure reaches and exceeds the preset upper limit value, the spring-operated adjusting valve 17 opens, bringing the boiler 2 into communication with the external environment. The excess steam, after passing through the passage elements 132, the venting gap 130 and the discharge hole of the spring-operated adjusting valve 17, exits the tank 9 through the outlet holes 35. When in the boiler 2 pressure falls below the lower limit value, the spring returns the piston to against the discharge hole and the spring-operated adjusting valve 17 closes again. Figure 12 shows a further embodiment of the coffee machine 1, equipped with a further spring-operated adjusting valve 117 and comprising a vent conduit 60.

The vent conduit 60 is obtained in the thickness of the side wall 12 of the tank 9, in a position opposite the lip portion 13, and extends obliquely between the bottom portion 90 of the tank 9 and the lid 14. In an end of the vent conduit 60, facing the lid 14, there is obtained a passage hole 60a, through which the vent conduit 60 is placed in communication with a further venting gap 61 obtained in the lid 14. More exactly, the end of the vent conduit 60 that is open and facing the lid 14 and an adjacent open end of the further venting gap 61 together define the passage hole 60a. In an embodiment that is not shown, the passage hole 60a is made in a zone of the coffee machine 1 that is different from the lid 14, such as, for example, the side wall 12 of the tank portion 3.

At the end of the vent conduit 60 opposite the passage hole 60a there is mounted the further spring-operated adjusting valve 117. The latter comprises an elongated and hollow cylinder-shaped body 117a that is arranged obliquely inside the vent conduit 60 and has a transverse diameter that is less than the cross section of the vent conduit 60. Inside the body 117a, a spring 117d maintains a piston 117b pressed against a discharge hole 117c in such a way as to close the latter and therefore the further spring-operated adjusting valve 117. The spring 117d is calibrated in such a way as to maintain the piston 117b pressed against the discharge hole 117c until, in the boiler 2, the upper pressure limit value is reached.

The discharge hole 117c communicates with the boiler 2 below through a passage element 154, made in a similar way to the passage elements 32 disclosed with reference to Figures 1 and 2, and comprising a first passage portion 154a and a second passage portion 154b, that are mutually aligned and obtained in corresponding zones of the tank portion 3 and of the boiler 2. When the discharge hole 117c is open, i.e. when the further adjusting valve 117 is open, the boiler 2 and the vent conduit 60 communicate mutually through the passage element 154.

The further venting gap 61 is comprised between the lid 14 and a plate 14b, which is shapingly coupled with the lid 14 and fixed on a face of the latter opposite the visible face 14a. The further venting gap 61 communicates with the external environment through the outlet holes 35 obtained in the lid 14 around the knob 55, and communicates with the vent conduit 60 through the passage hole 60a, defined by corresponding ends of the further venting gap 61 and of the vent conduit 60. In the plate 14b a bleeder hole 62 is further obtained, through which any condensation can be discharged outside the further venting gap 61.

When in the boiler 2 the pressure reaches and exceeds the preset upper limit value, the further spring-operated adjusting valve 117 opens, putting the boiler 2 in communication with the external environment. The excess steam, after passing through the passage element 154, the further open spring-operated adjusting valve 117, part of the vent conduit 60, the passage hole 60a and the further venting gap 61, exits the latter through the outlet holes 35. When in the boiler 2 pressure falls below the lower limit value, the spring 117d returns the piston 117b to against the discharge hole 117c and the further spring-operated adjusting valve 117 closes again.

In an embodiment that is not shown, at least one outlet hole 35 is made in a zone of the coffee machine 1 that is different from the lid 14, such as, for example, the side wall 12 of the tank portion 3.

Figure 10 shows a still further embodiment of the coffee machine 1, equipped with the spring-operated adjusting valve 17 and comprising a further vent conduit 50. The latter has approximately the shape of an upturned "L" and comprises a main portion 51 and a terminal portion 52. The conveying conduit 10 opens in the tank 9 through one or more outlet openings 19 obtained in the end portion 10a.

The main portion 51 of the further vent conduit 50 is substantially cylinder-shaped and projects from a peripheral zone of the bottom portion 90, extending parallel to the conveying conduit 10 and reaching near the lid 14. At the bottom portion 90, the main portion 51 communicates with the boiler 2 through a passage element 54. The latter, made in a substantially similar way to the passage elements 32 disclosed with reference to Figures 1 and 2, comprises a first passage portion 54a and a second passage portion 54b, mutually aligned and obtained in corresponding zones of the tank portion 3 and of the boiler 2.

At the end of the main portion 51 facing the opposite direction to the passage conduit 54 the spring-operated adjusting valve 17 is mounted, the function and structure of which have already been disclosed with reference to Figure 3.

The terminal portion 52 of the further vent conduit 50 is cylinder-shaped and projects obliquely from the body 17a of the spring-operated adjusting valve 17 in the direction of the central portion of the lid 14, thus reaching near the outlet holes 35. The terminal portion 52 with an outlet end 53 is elbow-shaped and is substantially aligned with the end portion 10a of the conveying conduit 10.

When in the boiler 2 the pressure reaches and exceeds the preset upper limit value, the spring-operated adjusting valve 17 opens. The excess steam, coming from the boiler 2 through the passage element 54 and the main portion 51, is discharged through the open spring-operated adjusting valve 17 in the terminal portion 52, thus exiting from the tank 9 through the outlet holes 35.

The coffee machine 1 can be connected to any heating source suitable for heating the water of the boiler 2, such as a gas ring or an electric plate.

In an embodiment that is not shown, the heating source is incorporated directly into the coffee machine 1, for example by inserting into the body of the latter an electric resistance that is suppliable by electric supplying means of known type.

In another embodiment that is not shown, the inhibiting means provided by the invention cooperates with signalling means arranged for emitting warning signals for a user of the coffee machine 1.

In a further embodiment that is not shown, the inhibiting means provided by the invention comprises switch means for switching on and/or switching off an apparatus comprising the coffee machine 1.

## Claims

1. Apparatus for preparing a coffee beverage (C) comprising containing means (2) for heating an extracting fluid, transferring means (5, 10, 110) arranged for enabling said fluid to pass through a dose of coffee (W) and sending said extracted beverage (C) to collecting means (9), **characterised in that** it comprises inhibiting means (16; 17), arranged for inhibiting said passing through when said fluid contains a substantial steam phase, said inhibiting means (16; 17) being associated with said transferring means (5, 10, 110).

2. Apparatus according to claim 1, wherein said inhibiting means (16; 17) is aligned on, or flanks, an end portion (10a; 110a) of a conveying conduit (10; 110),which is comprised in said transferring means (5, 10, 110) and in which said extracted coffee beverage (C) flows.

3. Apparatus according to any one of claims 4 to 7, further comprising venting means (32, 30, 33, 35, 132, 130) arranged for making said containing means (2) communicate with an external environment, wherein said venting means (32, 30, 33, 35, 132, 130) comprises gap means (30; 130) associated with said conveying conduit (10; 110).

4. Apparatus according to claim 8, wherein said gap means (30; 130) comprises a venting gap (30; 130), said venting gap (30; 130) being comprised between said conveying conduit (10; 110) and a casing (31; 131) fixed externally to said conveying conduit (10; 110), wherein said casing (31; 131) is shapingly coupled with, or envelops only partially, said conveying conduit (10; 110).

5. Apparatus according to any one of claims 8 to 11, wherein said venting means (32, 30, 33, 35, 132, 130) comprises a passage element (32; 132), said passage element (32; 132) being interposed between said gap means (30; 130) and said containing means (2) so as to make said gap means (30; 130) and said containing means (2) mutually communicating.

6. Apparatus according to claim 12, wherein said passage element (32; 132) is conduit-shaped or slot-shaped.

7. Apparatus according to any one of claims 12 to 14, wherein said passage element (32; 132) comprises a first passage portion (32a; 132a) and a second passage portion (32b; 132b) that are mutually communicating, wherein said first passage portion (32a; 132a) is obtained in said collecting means (9) and said second passage portion (32b; 132b) is obtained in said containing means (2).

8. Apparatus according to any one of claims 9 to 16, wherein said inhibiting means (16; 17) communicates with, or is contained in, said venting gap (30; 130).

9. Apparatus according to any one of claims 9 to 18, as appended to claim 5, wherein said venting means (32, 30, 33, 35, 132, 130) comprises a chamber (33), said chamber (33) being made near said end portion (10a) of said conveying conduit (10) and being communicating with said venting gap (30).

10. Apparatus according to claim 19, wherein said end portion (10a) comprises an outlet conduit (18) adjacent to said chamber (33) arranged transversely to said conveying conduit (10).

11. Apparatus according to claim 20, wherein said outlet conduit (18) is provided with at least one end opening (18b) and communicates with said conveying conduit (10) through a communicating hole (210b), in such a way as to make said conveying conduit (10) and said collecting means (9) communicate.

12. Apparatus according to any one of claims 5 to 21, wherein, in said end portion (110a), there is obtained an outlet opening (19) arranged for making said conveying conduit (110) communicate with said collecting means (9).

13. Apparatus according to any one of claims 3 to 22, wherein said conveying conduit (10; 110) comprises a base portion (20; 120), which is fixed to a bottom portion (90) of said collecting means (2), and a conveying portion (21; 121), which projects from said base portion (20; 120) in a direction opposite said bottom portion (90) and is arranged parallel to a longitudinal axis of said collecting means (9).

14. Apparatus according to claim 5, or according to any one of claims 6 to 25 as appended to claim 5, wherein said end portion (10a; 110a) of said conveying conduit (10; 110) is situated near lid means (14) arranged for alternatively opening and/or closing said collecting means (9).

15. Apparatus according to any one of claims 4 to 26, wherein said venting means (32, 30, 33, 35, 132, 130) comprises at least one outlet hole (35) obtained in said collecting means (9).

16. Apparatus according to claim 27, as appended to claim 26, wherein said at least one outlet hole (35) is obtained in said lid means (14).

17. Apparatus according to any preceding claim, wherein said inhibiting means (16; 17) comprises pressure-adjusting means (16; 17).

18. Apparatus according to claim 29, wherein said pressure-adjusting means (16; 17) is selected from a group comprising: weight-operated valve (16), spring-operated valve (17).

19. Apparatus according to claim 31, as appended to claim 19 or to any one of claims 20 to 30 as appended to claim 19, wherein said spring-operated valve (17) is interposed between said at least one outlet hole (35) and said chamber (33).

20. Apparatus according to any one of claims 30 to 32, wherein said weight-operated valve (16) is housed in a recess (15a) obtained in a portion (15) of said collecting means (9).

21. Apparatus according to claim 34, as appended to claim 19 or to any one of claims 20 to 34 as appended to claim 19, wherein said weight-operated valve (16) comprises a body (16a) in which there is obtained a discharge conduit (34) and wherein an end of said discharge conduit (34) communicates with said chamber (33).

22. Apparatus according to claim 34, or 35, wherein said weight-operated valve (16) is provided with a shutter element (16b), which is interposed between said body (16a) and said recess (15a) and arranged for alternatively opening and/or closing said discharge conduit (34).

23. Apparatus according to any one of claims 29 to 37, wherein said pressure-adjusting means (16; 17) adjusts a pressure of said fluid inside said containing means (2) in a range of relative pressure values, said range of relative pressure values being selected from a group consisting of the following ranges: 0.01-6 bar, 0.2- 1 bar, 0.3-0.8 bar.

24. Apparatus according to any one of claims 38 to 40, wherein said pressure-adjusting means (16; 17) adjusts said pressure in said range of values when said apparatus uses a coffee powder having a preset granulometry.

25. Apparatus according to claim 41, wherein said granulometry comprises values distributed statistically according to a multimodal distribution.

26. Apparatus according to claim 42, wherein said distribution has an average value comprised between approximately 500 and 200 µm.

27. Apparatus according to claim 42, or 43, wherein said distribution has a median value comprised between approximately 500 and 100 µm.

28. Apparatus according to any one of claims 42 to 44, wherein said distribution has a modal value comprised between approximately 700 and 500 µm.

29. Apparatus according to any preceding claim, further comprising heating means able to heat said extracting fluid in said containing means (2).
